# EUROPÄISCHE PATENTSCHRIFT

(11) **EP 1 173 997 B1**
(45) Veröffentlichungstag und Bekanntmachung des Hinweises auf die Patenterteilung: **08.06.2005**
(21) Anmeldenummer: 99915437.0
(22) Anmeldetag: 27.04.1999
(51) Int. Cl.: H04Q 7/38

(54) **VERFAHREN, UM VERBINDUNGEN IN EINEM MOBILNETZ ZU VERRECHNEN, UND DAZU GEEIGNETES IDENTIFIZIERUNGSMODUL**
BILLING METHOD FOR CONNECTIONS IN A MOBILE NETWORK AND AN IDENTIFICATION MODULE SUITED THEREFOR
PROCEDE PERMETTANT DE FACTURER DES COMMUNICATIONS DANS UN RESEAU MOBILE ET MODULE D'IDENTIFICATION APPROPRIE

(43) Veröffentlichungstag der Anmeldung: 23.01.2002
(73) Patentinhaber: Swisscom Mobile AG, 3050 Bern (CH)
(72) Erfinder: RITTER, Rudolf, CH-3052 Zollikofen (CH)
(74) Vertreter: P&TS Patents & Technology Surveys SA
(86) Internationale Anmeldenummer: PCT/CH1999/000174
(87) Internationale Veröffentlichungsnummer: WO 2000/065859

(56) Entgegenhaltungen:
- EP-A- 0 724 371
- WO-A-95/28062
- WO-A-98/58512
- US-A- 5 577 100

## Beschreibung

Die vorliegende Erfindung bezieht sich auf ein Verrechnungsverfahren in einem Telekommunikationssystem. Die Erfindung betrifft insbesondere, aber nicht ausschliesslich, ein Verrechnungsverfahren, das mit einem Identifizierungsmodul ausgeführt werden kann, sowie ein entsprechendes Identifizierungsmodul.

In Telekommunikationsnetzwerken, zum Beispiel in Telekommunikationsnetzwerken nach dem GSM-Standard, hängt der zu verrechnende Anrufbetrag von verschiedenen Parametern ab, insbesondere von der Dauer des Anrufs, von der Tageszeit und vom geographischen Standort des anrufenden Teilnehmers und des angerufenen Teilnehmers. Diese Parameter, insbesondere die Anrufdauer, werden in der Infrastruktur des Netzes ermittelt Aus diesen Parametern wird dann der zu verrechnende Betrag ermittelt und einem Konto des Teilnehmers beim Netzbetreiber oder bei einem Finanzinstitut belastet. Dieses Verrechnungsverfahren ist extrem aufwendig und teuer für den Netzbetreiber und verlangt ein komplexes Verrechnungssystem und viele manuelle oder halbautomatische Operationen.

Neben diesen Postpaid-Verrechnungsverfahren sind auch Prepaid-Systeme bekannt. Prepaid-Systeme benutzen meistens eine teilnehmerspezifische Identifizierungskarte, die ein Konto umfasst, welches mit einem Geldbetrag geladen werden kann. Die für die Anrufe des Teilnehmers verrechneten Beträge werden dann nach jedem Anruf diesem Konto belastet; verschiedene Verfahren sind bekannt, um das Konto später nachzuladen. Die zur Ermittlung der verrechneten Beträge benötigten Parameter sind unter dem Begriff CAI (Charge Advice Information) bekannt und werden in einem vom Netzbetreiber verwalteten Server ermittelt und mit Signalisierungsmeldungen an die Identifizierungskarte des Teilnehmers übermittelt. Verarbeitungsmittel in der Karte zeigen dann den verrechneten Betrag auf der Anzeige des Mobilgeräts in der lokalen Währung an und ziehen diesen Betrag vom gespeicherten Geldbetrag ab.

Prepaid-Verrechnungsverfahren sind günstig für den Netzbetreiber, da er keine Rechnung erstellen muss. Die Auswertung der zu verrechnenden Beträge muss er jedoch stets durchführen. Ausserdem ist dieses Verfahren im GSM-Umfeld nur mit Geräten und in geographischen Bereichen anwendbar, in welchen die Funktion Advice of Charge (AOC), die im Standard ETSI ETS300 510 (entsprechend der technischen Spezifikation GSM 02.24) definiert ist, angewendet werden kann. Daher erlauben Prepaid-Karten meistens nur sehr eingeschränkte Roamingsmöglichkeiten.

Das Patentdokument EP656733 beschreibt ein Verrechnungssystem für Mobilgeräte, in welchem alle Verbindungsparameter, die zur Ermittlung der verrechneten Gebühr nötig sind, im Speicher des Mobilgeräts gespeichert sind. Dieser Betrag kann dann auf der Anzeige des Mobilgeräts zur Information angezeigt werden. Es ist jedoch in diesem Dokument nicht beschrieben, wie die ermittelte Gebühr automatisch dem Teilnehmer belastet werden kann. Ausserdem erlaubt das beschriebene Verfahren nicht, die Gebühr anzuzeigen, wenn der Teilnehmer sich nicht in seinem Heimnetz befindet.

Das Patentdokument FR2680261 beschreibt eine Telefon-Chipkarte, die ein Prepaid-Konto sowie Tariftabellen enthält. Die verrechneten Gebühren für die Verbindungen werden aus dem Prepaid-Konto in Abhängigkeit von der Verbindungsdauer und der gespeicherten Tarife ermittelt. Die Zeit und die Dauer der Verbindungen werden ebenfalls in einer externen Vorrichtung ermittelt. Dieses Verfahren kann auch nur im Heimnetz des Teilnehmers angewendet werden.

EP-A-0724371 beschreibt ein Identifizierungsmodul, in weichem Tariftabellen abgelegt sind. Der Mobilteilnehmer kann anhand von diesen Tarifen entscheiden, in welchem Mobilfunknetz er sich einloggen will. Diese Tarife werden jedoch nur für die Bestimmung des Netzes verwendet, aber nicht für die Verrechnung. Das Modul kann nur im Teilnehmerheimnetz verwendet werden.

WO98/58512 beschreibt ein ähnliches Verfahren.

WO95/28062 beschreibt ein Verfahren, um eine Verbindung eines Mobilteilnehmers zu verrechnen, wobei der zu verrechnende Betrag nach der Verbindung anhand der Dauer der Verbindung und eines auf dem Identifizierungsmodul des Mobilteilnehmers abgelegten Tarifs ermittelt wird. Es wird nur der Tarif eines einzelnen Netzes abgelegt. Dieses Verfahren funktioniert nur im Heimnetz des Mobilteilnehmers.

Es ist folglich ein Ziel dieser Erfindung, ein Verfahren - insbesondere ein für den Netzbetreiber vereinfachtes Verrechnungsverfahren - vorzuschlagen, welches nicht die Nachteile der bekannten Verfahren aufweist.

Ein anderes Ziel der Erfindung ist es, ein Verrechnungsverfahren vorzuschlagen, mit welchem auch Anrufe aus einem besuchten Netz, zum Beispiel aus einem Netz im Ausland, verrechnet werden können.

Ein anderes Ziel der Erfindung ist es, ein Verrechnungsverfahren vorzuschlagen, mit welchem Teilnehmer stets zum günstigsten Tarif im Ausland telefonieren können.

Vorzugsweise kann das Verrechnungsverfahren sowohl in einem Prepaid als auch in einem Postpaid System angewendet werden.

Erfindungsgemäss werden diese Ziele mit Hilfe des im unabhängigen Verfahrensanspruch beschriebenen Verfahrens erreicht,
wobei verschiedene Varianten in den unabhängigen Verfahrensansprüchen beschrieben werden. Diese Ziele werden ausserdem mit Hilfe eines im unabhängigen Identifizierungsmodulsanspruch beschriebenen Identifizierungsmoduls erreicht.

Insbesondere werden diese Ziele mit Hilfe eines Verfahrens, um eine Verbindung eines Mobilteilnehmers in einem Netz diesem Mobilteilnehmer zu verrechnen, erreicht, wobei die Tarife, die für die Verrechnung dieser Verbindung verlangt werden, in einem Identifizierungsmodul des Mobilteilnehmers abgelegt werden,
wobei die Tarife mehrerer Netze, die sich über das Gebiet erstrecken, wo sich der Mobilteilnehmer befinden kann, in das Identifizierungsmodul abgelegt werden,
wobei das für die Verbindung beanspruchte Netz anhand dieser Tarife ausgewählt werden kann,
wobei der zu verrechnende Betrag nach der Verbindung anhand der Dauer der Verbindung und des abgelegten Tarifs im Identifizierungsmodul ermittelt wird,
und wobei die Tarife aus Grundtarifen, die von einer Vielzahl verschiedener Betreiber von besuchten Netzen, die sich über das Gebiet erstrecken, wo sich der Mobilteilnehmer befindet, verlangt werden, und aus Zuschlägen und/oder Rabatten, die vom Betreiber des Teilnehmerheimnetzes für eine Verbindung des Teilnehmers in diesen besuchten Netzen verlangt werden, bestehen.

Diese Ziele werden ausserdem mit Hilfe eines Identifizierungsmoduls erreicht, welches in wegnehmbarer Weise in einem Endgerät eingesteckt werden kann, um einen Teilnehmer in einem Telekommunikationsnetz zu identifizieren, enthaltend:
Datenverarbeitungsmittel, welche das Speichern von Daten ermöglichen, die mindestens Identifikationsdaten des Teilnehmers (20) enthalten,
einen Speicherbereich, in welchem die Tarife mehrerer Netze, die sich über das Gebiet erstrecken, wo sich der Teilnehmer befindet, abgelegt sind,
ein Modul, mit welchem das zu beanspruchende Netz ausgewählt werden kann,
wobei ein Modul derart ausgestaltet ist, daß die zu verrechnenden Beträge für Verbindungen durch das ausgewählte Netz anhand der Dauer der Verbindungen und der abgelegten Tarife ermittelt werden können,
wobei das Identifizierungsmodul derart ausgestaltet ist, daß sowohl die Tarife, die von einer Vielzahl verschiedener Betreiber von besuchten Netzen verlangt werden, als auch die Zuschläge und/oder Rabatte, die vom Betreiber des Teilnehmerheimnetzes für eine Verbindung des Teilnehmers in diesen besuchten Netzen verlangt werden, im Identifizierungsmodul abgelegt sind.
Das Identifizierungsmodul besteht vorzugsweise aus einer Chipkarte, beispielsweise einer in GSM-Netzen bekannten SIM-Karte. Mit diesen Tarifen kann das Identifizierungsmodul selbst die zu verrechnende Gebühr ermitteln.

Vorzugsweise enthält das Identifizierungsmodul ein integriertes Zeitbestimmungsmodul, mit welchem die Dauer der Verbindungen ermittelt werden kann. Dies erlaubt, die zu verrechnende Gebühr in Abhängigkeit von der Dauer der Verbindung zu ermitteln, und diese Dauer innerhalb des Moduls - und nicht in der Infrastruktur des Netzes - zu ermitteln.

Damit der Teilnehmer in einem besuchten Netz immer zum günstigsten Preis telefonieren kann, umfasst das Identifizierungsmodul ein Modul, mit welchem das zu beanspruchende Netz ausgewählt werden kann. In einer ersten Variante erlaubt dieses Modul, die Tarife verschiedener Mobilnetzbetreiber auf der Anzeige des Teilnehmerendgeräts anzuzeigen, damit der Teilnehmer manuell, zum Beispiel menügesteuert, das Netz auswählen kann, in welches er sich einloggen will. In einer zweiten Variante wählt das Identifizierungsmodul automatisch das günstigste Netz aus.

Das Mobilnetz kann beispielsweise ein digitales Mobilfunknetz sein, beispielsweise ein GSM (Global System for Mobile Communications), PDC (Personal Digital Cellular) oder UMTS-Netz (Universal Mobile Telecommunications Systems). In einer Variante kann aber das Mobilnetz auch ein Fixnetz sein, beispielsweise ein PSTN (Public Switched Telelecommunication Network), ISDN (Integrated Sevices Digital Network), DECT (Digital European Cordless Telecommunication) oder auch PLC (Power Line Communication) Netz, in welchem Teilnehmer mit einem Identifizierungsmodul, beispielsweise einer Chipkarte, identifiziert werden. In einer anderen Variante kann das Mobilnetz auch ein paketorientiertes Netz sein, beispielsweise ein ATM (Asynchronous Transfer Mode), TCP-IP (Transmission Control Protocol / Internet Protocol), GPRS oder EDGE Netz. Diese Varianten können ebenfalls in einem System kombiniert werden, und es ist zum Beispiel auch möglich, dass ein einziges Identifizierungsmodul, das in verschiedenen Netzen verschiedener Typen angewendet werden kann, Tarife für die Benutzung dieser verschiedenen Netze umfasst.

Das Endgerät kann beispielsweise ein Mobilfunktelefon sein, oder ein Fixnetztelefon, ein PC, Notebook, PDA, Fax oder ein Internet-Terminal mit Teilnehmeridentifizierung anhand einer Chipkarte.

Die Tarife verschiedener Netzbetreiber werden vorzugsweise in einem Server abgelegt, und können durch das Mobilnetz in den Identifizierungsmodulen ferngeladen werden. Dadurch können die Identifizierungsmodule immer die aktuelle Version der Tarife anwenden.

Der ermittelte Betrag für eine Verbindung kann entweder gleich nach der Verbindung auf einem vorbezahlten Geldkonto im Identifizierungsmodul abgebucht werden, oder in einen Billingbeleg verpackt und einem Verrechnungszentrum zugestellt werden. Das erfindungsgemässe Verfahren kann daher entweder als Prepaid als auch als Postpaid-Verfahren angewendet werden.

Die vorliegende Erfindung wird mit Hilfe der Beschreibung besser verständlich, welche als Beispiel angeführt ist, und durch die Figuren dargestellt wird, wobei:
Die Figur 1 ein Blockschema eines erfindungsgemässen Systems zeigt.
Die Figur 2 ein konventionelles Endgerät mit einem erfindungsgemässen Identifizierungsmodul zeigt.
Die Figur 3 eine erfindungsgemässe Tariftabelle zeigt.

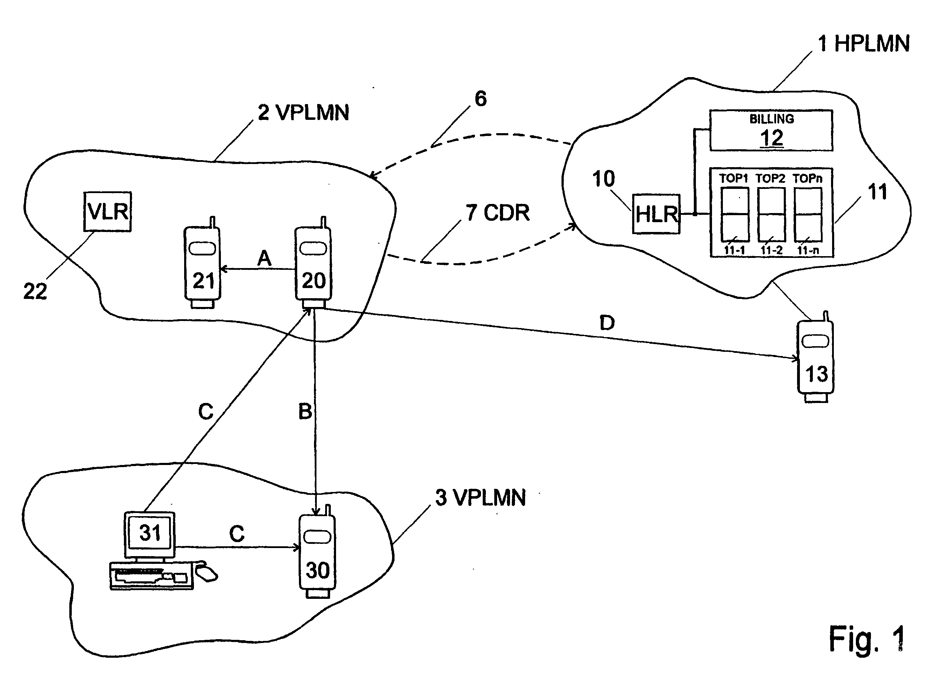

Die Figur 1 zeigt als Beispiels ein System mit drei Mobilnetzen 1, 2 und 3. In diesem Beispiel ist 1 das Heimnetz des Mobilteilnehmers 20, d.h. das Netz, das vom Betreiber Op1 betrieben wird, von welchem der Teilnehmer 20 sein Identifizierungsmodul bekommen hat. In GSM-Mobilfunknetzen wird dieses Netz meistens HPLMN benannt (Home Public Land Mobile Network). Das Netz 2, in welchem sich der Mobilteilnehmer im Moment befindet, ist das besuchte Netz (VLPMN - Visitor Public Land Mobile Network) und wird von einem zweiten Netzbetreiber Op2 betrieben. Das vom dritten Netzbetreiber Op3 betriebene Netz 3 ist ein anderes Netz, mit welchem der Mobilteilnehmer 20 auch kommunizieren kann, vorausgesetzt, dass eine Roaming-Abkommen zwischen den Netzbetreibern besteht.

In dieser verei nfachten Figur sind die drei Netze 1, 2, 3 geographisch getrennt. Häufig können sich die Netze mindestens teilweise überdecken; es ist zum Beispiel bei Mobilfunknetzen üblich, dass zwei oder mehr Betreiber Mobilnetze betreiben, die sich über dasselbe Gebiet erstrecken. In diesem Fall hat der Mobilteilnehmer oft die Möglichkeit, das für seine Verbindung zu beanspruchende Mobilnetz auszuwählen. In bekannten Systemen wird diese Auswahl allerdings getroffen, indem beim Einschalten des Endgeräts eine im Identifizierungsmodul 40 gespeicherte, vom Heimnetzbetreiber festgelegte und vom Teilnehmer veränderbare Preferenzliste gelesen wird. Diese bekannten Systeme bieten jedoch keine Hilfe, um das Mobilnetz auszuwählen, das momentan die günstigsten Tarife anbietet.

Der Mobilteilnehmer 20 kann Verbindungen A mit Teilnehmern 21 im selben besuchten Netz 2 aufbauen. Er kann auch mit einem Teilnehmer 30 in einem anderen fremden Netz 3 direkt telefonieren (Pfeil B), oder eine Verbindung C mit diesem Teilnehmer durch einen sogenannten Call-Back-Server 31 aufbauen lassen. Er kann aber auch mit einem Teilnehmer 13 im eigenen Heimnetz telefonieren (Pfeil D). Um alle diese Verbindungen aufzubauen muss er sich vorerst in ein Mobilnetz 2 einloggen, das sich über das Gebiet erstreckt, wo sich der Teilnehmer befindet. Beim Einloggen werden dann die Benutzerdaten, die im HLR (Home Location Register) des Teilnehmerheimnetzes 1 gespeichert sind, ins VLR (Visitor Location Register) 22 des besuchten Netzes 2 kopiert; gleichzeitig wird der momentane Standort des Teilnehmers im HLR 10 registriert.

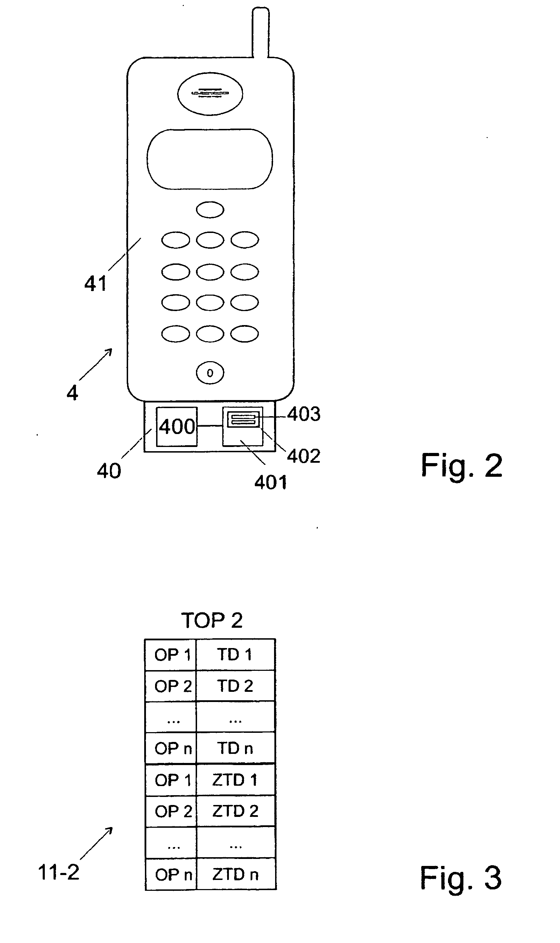

Ein Server 11 ist in diesem Beispiel mit dem Heimnetz 1 des Mobilteilnehmers 20 verbunden; dieser Server könnte sich aber auch in einem anderen Netz befinden. Im Server 11 werden Tariftabellen 11-1, 11-2, 11-3 abgelegt, die von verschiedenen Netzbetreibern Op1, Op2, ..Opn für die Beanspruchung ihrer Netze verlangt werden. Diese Tarife werden im Server 11 vorzugsweise auf Initiative der Netzbetreiber abgelegt und können auch von ihnen verwaltet und aktualisiert werden. Die Struktur dieser Tariftabellen wird später in Bezug auf Figur 3 näher erläutert.

Ein Verrechnungszentrum 12 kann sich vorzugsweise auch im Heimnetz 1 befinden, um Teilnehmern, die keine vorbezahlten Karten erworben haben, Rechnungen zu stellen, wobei die verrechneten Beträge in den Identifizierungsmodulen ermittelt werden, wie später erläutert. Das Verrechnungszentrum kann auch in einem Prepaid-System angewendet werden, um die gespeicherten Geldbeträge zu prüfen.

Die Figur 2 zeigt ein Endgerät 4, in diesem Beispiel ein herkömmliches Mobilfunktelefon 41 mit einem erfindungsgemässen Identifizierungsmodul 40, das vom Mobilteilnehmer 20 angewendet werden kann. Das Identifizierungsmodul 40 besteht in diesem bevorzugten Beispiel aus einer Chipkarte, beispielsweise eine SIM-Karte in Full-Size oder Plug-In Format. Die Chipkarte 40 enthält Datenverarbeitungsmittel, zum Beispiel einen bekannten GSM-SIM-Mikrokontroller oder einen Mehrzweck-JAVA-Prozessor 401, sowie Zeitbestimmungsmittel 400. Die Zeitbestimmungsmittel 400 können beispielsweise einen konventionellen LC- oder Quarzoszillator, einen GPS-Empfänger oder einen Oszillator, der eine elektrische Frequenz aus der Interferenz zwischen zwei Lasersignalen erzeugt, umfassen.

Die Datenverarbeitungsmittel 401 enthalten einen Speicherbereich 402, in welchem verschiedene Anwendungsdaten und Programme 403, unter anderem verschiedene Softwaremodule, Tariftabellen und Signaturmittel, abgelegt werden, wie später erläutert.

Wir werden jetzt das erfindungsgemässe Verrechnungsverfahren näher beschreiben.

Wenn das Endgerät 4 eingeschaltet wird, prüft ein Modul, vorzugsweise ein Softwaremodul im Speicherbereich 402, ob das Zeitbestimmungsmodul 400 eingestellt ist. Ist das nicht der Fall, wird vorzugsweise eine Zeitabfragemeldung an einen nicht dargestellten Zeitkontroller geschickt, der mit einem Zeitbeleg antwortet. Der Zeitbeleg wird vorzugsweise elektronisch signiert und ohne Verzögerung durch das Netz übertragen. Das Identifizierungsmodul 40 empfängt den signierten Zeitbeleg, prüft die Signatur und, wenn die Signatur korrekt ist, setzt das Zeitbestimmungsmodul 400 mit der übermittelten Zeit ein. Andere Mechanismen wie elektronische Zeitstempel und periodische Zeitüberprüfungen können vorgesehen werden, um die Zeit einzustellen und um Fälschungen zu verhindern.

Parallel überprüft beim Einloggen ein geeignetes Softwaremodul im Speicherbereich 402, ob die im Identifizierungsmodul abgelegten Tarife aktuell und vollständig sind. Insbesondere wird überprüft, ob eine aktuelle Version der Tarife aller Netze, die sich über das Gebiet erstrecken, wo sich der Mobilteilnehmer befindet, abgelegt ist. Zu diesem Zweck wird beim Einloggen ein Beleg an den Server 11 im Heimnetz übermittelt, in dem die aktuelle Tarifversion gespeichert ist. Wenn die Tariftabelle im Modul 40 nicht mehr aktuell ist oder wenn sie ergänzt werden muss, wird ein Tarifbeleg vom Server 11 erzeugt, elektronisch signiert, und durch das Kommunikationsnetz 2 an das Identifizierungsmodul 40 übermittelt (Pfeil 6). Ein geeignetes Softwaremodul im Speicherbereich 402 überprüft dann anhand des öffentlichen elektronischen Schlüssels des benannten Servers (11) die Signatur des empfangenen Tarifbelegs und die gespeicherte Tariftabelle wird ergänzt oder angepasst, wenn diese Signatur korrekt ist.

Dieses Tarifübermittlungsverfahren kann auch jedesmal eingesetzt werden, wenn ein Netzbetreiber eine Tarifanpassung vornimmt und seine Tariftabellen im Tarif-Server 11 ändert. In diesem Fall kann der Tarifserver automatisch die neuen Tarife an die Teilnehmer senden.

Wenn die aktuellen Tarife im Identifizierungsmodul vorhanden sind, kann anhand dieser Tarife ausgewählt werden, in welches Netz das Endgerät 20 sich einloggt. Zu diesem Zweck umfasst in einer ersten Variante der Speicherbereich 402 ein Softwaremodul, mit welchem die Tarife verschiedener Mobilnetzbetreiber auf der Anzeige des Teilnehmerendgeräts angezeigt werden. Das Modul kann beispielsweise den Minutenpreis aller verfügbaren Mobilnetze anzeigen. Der Teilnehmer kann dann manuell, zum Beispiel mit einem Menü, das Netz auswählen, in welches er sich einloggen will. In einer zweiten Variante wählt das Identifizierungsmodul automatisch das anzuwendende Netz aus, beispielsweise immer das billigste Netz. Vorzugsweise kann der Teilnehmer und/oder der Heimnetzbetreiber dieses Teilnehmers durch die Eingabe zusätzlicher Prioritätskriterien im Identifizierungsmodul diese Auswahl beeinflussen. Beispielsweise kann der Mobilteilnehmer und/oder der Heimnetzbetreiber definieren, dass der Teilnehmer sich nie in ein bestimmtes Netz einloggt, oder dass er immer mit einem anderen bestimmten Netz telefonieren will, wenn dieses verfügbar ist. Andere Kriterien, unter anderem die Qualität des Netzes, beispielsweise die Verfügbarkeit oder die Zeit, um eine Verbindung aufzubauen, können zusätzlich zum Verbindungspreis auch angewendet werden, um ein Netz auszuwählen.

Bei einem Verbindungsaufbau wird vorzugsweise die Anrufnummer durch ein geeignetes Modul im Speicherbereich 402 analysiert. Vorzugsweise wird bei dieser Gelegenheit nochmals überprüft, ob das Netz, in welchem der Mobilteilnehmer momentan registriert ist, die billigste Verbindung mit der gewünschten Nummer anbietet. Ist dies der Fall, wird der Verbindungsaufbau effektiv vollzogen. Bietet ein anderes Netz einen billigeren Tarif, logt sich das Mobilgerät 4 vorzugsweise in dieses billigere Netz ein, wobei eine Bestätigung vom Teilnehmer verlangt werden kann. Die Verbindung wird dann in diesem billigeren Netz aufgebaut.

Die Tarife sind meistens von der Dauer der Verbindung abhängig. Es ist daher durchaus möglich, dass ein erstes verfügbares Netz für kurze Anrufe billiger als ein zweites verfügbares Netz, und für längere Anrufe teurer ist. Vorzugsweise versucht das benannte Modul im Speicherbereich 402 im voraus die Dauer der Verbindung zu prognostizieren. Diese Prognose kann sich beispielsweise auf eine durchschnittliche Verbindungsdauer stützen, die unterschiedlich für verschiedene Anrufnummern oder Anrufnummergruppen berechnet werden kann. Beispielsweise kann der Speicherbereich 402 die durchschnittliche Dauer der lokalen und internationalen Verbindungen des Mobilteilnehmers 20 umfassen. In einer Variante kann ausserdem der Teilnehmer selbst angeben, wie lange er telefonieren will. Das zu verwendende Netz wird dann auf Basis des anhand der abgelegten Tarife ermittelten Preises für eine Verbindung mit der angegebenen Anrufnummer und der prognostizierten Dauer ausgewählt.

Während und nach der Verbindung werden dann innerhalb des Identifizierungsmoduls 40 alle zur Auswertung des zu verrechnenden Betrags benötigten Parameter gesammelt. Dieser Betrag ist beispielsweise unter anderem von der Gesprächsdauer, von der Tageszeit, vom Wochentag, vom Standort des anrufenden Teilnehmers und des angerufenen Teilnehmers, von den Tarifen des ausgewählten Netzes und gegebenenfalls von benutzerspezifischen Discounts, beispielsweise für oft angerufene Nummern, abhängig. Alle diese Parameter sind entweder im Speicherbereich 402 des Moduls 40 vorhanden oder können mit dem eingebauten Zeitbestimmungsmodul 400 ermittelt werden. Die Auswertung des zu verrechnenden Betrags kann daher gleich nach Ende des Anrufs innerhalb des Identifizierungsmoduls 40 durchgeführt werden, ohne dass das Netz für diese Auswertung beansprucht wird. Dieser Betrag wird dann vorzugsweise auf der Anzeige des Mobilgeräts 4 angezeigt und in einen Billingbeleg verpackt, mit einer elektronischen Signatur versehen und durch das Telekommunikationsnetz an das Verrechnungszentrum 12 übertragen (Pfeil 7).

Wenn das ldentifizierungsmodul 40 einen vorbezahlten Geldbetrag enthält (Prepaid-Karte), wird der verrechnete Betrag vorzugsweise direkt diesem Konto belastet. Prepaid-SIM-Karten werden unter anderem in der Patentanmeldung EP96810570.0 beschrieben. Billingbelege werden in diesem Fall nur zur Kontrolle und für die Statistik im Verrechnungszentrum 12 verwendet.

Wenn das Identifizierungsmodul 40 keine Prepaid-Karte ist, werden die Billingbelege im Verrechnungszentrum 12 nach Finanzdienstleistern sortiert und den entsprechenden Finanzdienstleistern übermittelt. Dieser Finanzdienstleister stellt dem Teilnehmer dann eine Rechnung oder belastet sein Konto. Als Finanzdienstleister kommt zum Beispiel der Heimnetzbetreiber selbst in Frage, oder auch eine Bank, ein Kreditkartenunternehmen oder andere Inkassostellen. Da die Billingbelege bereits einen Rechnungsteil repräsentieren, braucht der Heimnetzbetreiber kein eigentliches Billingsystem mehr zu verwalten.

Da alle Elemente für einen Gebührenauszug im Billingbeleg vorhanden sind, können sie dem Teilnehmer zum Beispiel über Internet oder per Post bereitgestellt werden. Billingbelege sind, wie schon erwähnt, elektronisch verschlüsselt und signiert, daher ist sichergestellt, dass nur der berechtigte Teilnehmer auf seinen Gebührenauszug zugreifen kann. Die Integrität der Billingbelege kann demzufolge auch sichergestellt werden.

Der Fachmann wird feststellen, das Pre- und Postpaid-Verrechnungsverfahren gemäss der Erfindung parallel im gleichen Telekommunikationssystem eingesetzt werden können.

Dieses Verfahren kann nicht nur eingesetzt werden, um Anrufe vom und zum Teilnehmer zu verrechnen, sondern auch um die Benutzung von anderen Ressourcen im Identifizierungsmodul 40 zu verrechnen. Grundsätzlich können mit diesem Verfahren alle Operationen, für die alle Verrechnungsparameter im Modul 40 zu Verfügung stehen, verrechnet werden. Beispielsweise kann auch die Benutzung von im Speicherbereich 402 gespeicherten Programmen verrechnet werden, zum Beispiel in Abhängigkeit von der Dauer der Benutzung.

Wir werden jetzt mit Hilfe der Figur 3 die Struktur der Tariftabellen 11-1 bis 11-n näher erläutern.

Die Figur 3 zeigt als Beispiel die Tarife TOP2, die vom Betreiber Op2 verlangt werden. Diese Tarife werden in einem Bereich 11-2 im Tarifserver 11 abgelegt. Die Verwaltung der Tarife TOP1 bis TOPn im Tarifserver kann von den einzelnen Netzbetreibern Op1 bis Opn über einen kryptographisch gesicherten Prozess vollzogen werden.

Im oberen Teil der Tabelle 11-2 kann der Betreiber Op2 die Tarifdaten TD1 bis TDn angeben, die er für Verbindungen mit anderen Netzen der Betreiber Op1 bis Opn verlangt. Dieser Speicherbereich 11-2 wird vom Betreiber Op2 verwaltet und aktualisiert. Beispielsweise enthalten die Tarifdaten TD3 in der Tabelle 11-2 alle Tarife, die vom Betreiber Op2 für die Verkehrsabwicklung mit dem Netz des Betreibers Op3 verlangt werden. Diese Tarifdaten TD3 enthalten beispielsweise den vom Betreiber Op2 verlangten Preis als Funktion der Dauer für einen Anruf aus dem Netz 2 ins Netz 3, und den Preis für andere Dienste, wie zum Beispiel für das Senden oder den Empfang von Kurzmeldungen, usw.

Im unteren Teil der Tabelle 11-2 werden die Zuschläge ZTD1 bis ZTDn angegeben, die vom Heimnetzbetreiber Op1 für diese verschiedenen Verbindungen verlangt werden. Da der Heimnetzbetreiber für die Verwaltung des Mobilteilnehmers 20 und für die Verrechnung zuständig ist, kann er auch eine Gebühr für Verbindungen seines Teilnehmers 20 verlangen, wenn dieser Teilnehmer sich in einem besuchten Netz 2 befindet. Dabei kann der Heimnetzbetreiber verschiedene Zuschläge für Verbindungen mit verschiedenen fremden Netzen verlangen. Der Betreiber Op1 kann ausserdem auch verschiedene Rabatte, z.B. Firmenrabatte, Vieltelefoniererrabatte oder Rabatte für Freunde und Familie, in diesem Bereich 11-2 definieren, wobei diese Rabatte zum Beispiel als Applets implementiert werden können.

Das erfindungsgemässe Verfahren erlaubt es auch, Verbindungen mit sogenannten Call-Back-Servern 31 zu verwalten. In diesem Fall müssen auch die Tarife, die von verschiedenen Call-Back-Server-Betreibern verlangt werden, im Server 11 und in den Identifizierungsmodulen 40 abgelegt werden. Im dargestellten Beispiel kann der Teilnehmer 20 eine Verbindung mit dem Teilnehmer 30 auch durch den Call-Back-Server 31 aufbauen lassen, wenn die Tarife dieses Servers billiger als die Tarife anderer Betreiber sind.

Wenn der Mobilteilnehmer sich während einer Verbindung bewegt, zum Beispiel im Auto, können bekannte Hand-Over Prozesse angewendet werden, wenn die Grenzen des beanspruchten Netzes erreicht werden, damit die Verbindung mit einem anderen Netz weitergeführt wird. Solche Prozesse können auch eingesetzt werden, wenn der Teilnehmer einen Bereich erreicht, über den sich ein billigeres Netz erstreckt, als das vor dem Verbindungsaufbau ausgewählte Netz. Das entsprechende Modul im Speicherbereich 402 kann auch einen Hand-Over

einleiten, wenn bei einem Zeitbereichwechsel ein anderes Netz günstiger wird.

In einer anderen Ausführungsvariante werden die Tarife TDx als Algorithmus angegeben, wobei gewisse Parameter wie Zeit, Wochentag, usw.. berücksichtigt werden. Die Algorithmen werden dann in einer Programmiersprache, z.B. Java, implementiert, und beispielsweise als auf dem Modul 402 über das Netzwerk geladen. Diese Applets werden dann auf der Prozessorkarte zur Bestimmung der Tarife ausgeführt.

## Patentansprüche

1. Verfahren, um eine Verbindung eines Mobilteilnehmers (20) in einem Netz (2) aus einem oder mehreren der folgenden Typen:
Mobilfunknetz, Fixnetz, in welchem Teilnehmer mit einem Identifizierungsmodul identifiziert werden, und/oder paketorientiertes Netz diesem Mobilteilnehmer zu verrechnen, wobei die Tarife, die für die Verrechnung dieser Verbindung verlangt werden, in einem Identifizierungsmodul (40) des Mobilteilnehmers abgelegt werden,
wobei die Tarife (11-1, 11-2, 11-3) mehrerer Netze (1, 2, 3) aus einem oder mehreren der folgenden Typen: digitales Mobilfunknetz, Fixnetz, in welchem Teilnehmer mit einem Identifizierungsmodul identifiziert werden, und/oder paketorientiertes Netz, die sich über das Gebiet erstrecken, wo sich der Mobilteilnehmer (20) befinden kann, in das benannte Identifizierungsmodul abgelegt werden,
wobei das für die Verbindung beanspruchte Netz anhand dieser benannten Tarife ausgewählt werden kann,
**dadurch gekennzeichnet,**
**dass** der zu verrechnende Betrag nach der Verbindung anhand der Dauer der Verbindung und des benannten abgelegten Tarifs im Identifizierungsmodul (40) ermittelt wird,
wobei die benannten Tarife aus Grundtarifen, die von einer Vielzahl verschiedener Betreiber von besuchten Netzen (2), die sich über das Gebiet erstrecken, wo sich der Mobilteilnehmer (20) befindet, verlangt werden, und aus Zuschlägen und/oder Rabatten, die vom Betreiber des Teilnehmerheimnetzes (1) für eine Verbindung des Teilnehmers in diesen besuchten Netzen (2) verlangt werden, bestehen.

2. Verfahren gemäss dem vorhergehenden Anspruch, **dadurch gekennzeichnet, dass** der benannte zu verrechnende Betrag nach der Verbindung auf der Anzeige des Mobilgeräts angezeigt wird.

3. Verfahren gemäss einem der vorhergehenden Ansprüche, **dadurch gekennzeichnet, dass** der zu verrechnende Betrag einem vorausbezahlten Geldkonto im Identifizierungsmodul (40) belastet wird.

4. Verfahren gemäss einem der Ansprüche 1 bis 2, **dadurch gekennzeichnet, dass** der zu verrechnende Betrag in einen Billingbeleg verpackt wird und einem Verrechnungszentrum (12) zugestellt wird.

5. Verfahren gemäss dem vorhergehenden Anspruch, **dadurch gekennzeichnet, dass** die benannte Billingbelege vom Identifizierungsmodul (40) elektronisch signiert werden.

6. Verfahren gemäss einem der vorhergehenden Ansprüche, **dadurch gekennzeichnet, dass** die benannte Dauer der Verbindung anhand eines im Identifizierungsmodul integrierten Zeitbestimmungsmoduls (400) ermittelt wird.

7. Verfahren gemäss einem der vorhergehenden Ansprüche, **dadurch gekennzeichnet, dass** die benannten Tarife in einem Server (11) abgelegt sind und in das benannte Identifizierungsmodul (40) ferngeladen werden können.

8. Verfahren gemäss dem vorhergehenden Anspruch, **dadurch gekennzeichnet, dass** die Version der im Identifizierungsmodul (40) abgelegten Tarife beim Einloggen in ein Netz (2) aus einem oder mehreren der folgenden Typen: digitales Mobilfunknetz, Fixnetz, in welchem Teilnehmer mit einem Identifizierungsmodul identifiziert werden, und/oder paketorientiertes Netz überprüft wird, und dass diese Tarife nötigenfalls aktualisiert werden.

9. Verfahren gemäss einem der Ansprüche 7 oder 8, **dadurch gekennzeichnet, dass** die benannten ferngeladenen Tarife vom benannten Server (11) signiert werden, und dass diese Signatur im Identifizierungsmodul (40) überprüft wird.

10. Verfahren gemäss einem der Ansprüche 7 bis 9, **dadurch gekennzeichnet, dass** die benannten Tarife mehrerer Netze, die im benannten Server (11) abgelegt werden, von den Betreibern (1..n ) dieser Netze selber verwaltet und aktualisiert werden können.

11. Verfahren gemäss einem der vorhergehenden Ansprüche, **dadurch gekennzeichnet, dass** die Tarife verschiedener Netze (2) vor einer Verbindung auf der Anzeige des Mobilgeräts (41) angezeigt werden können.

12. Verfahren gemäss dem vorhergehenden Anspruch, **dadurch gekennzeichnet, dass** der benannte Mobilteilnehmer (20) selbst bestimmen kann, welches Netz er beanspruchen will.

13. Verfahren gemäss einem der Ansprüche 1 bis 11, **dadurch gekennzeichnet, dass** die Auswahl des zu beanspruchenden Netzes (2) vom benannten Identifizierungsmodul (40) anhand der benannten Tarife getroffen wird.

14. Verfahren gemäss dem vorhergehenden Anspruch, **dadurch gekennzeichnet, dass** die Auswahl des beanspruchten Netzes auch von der Verfügbarkeit und/oder von der Qualität dieses Netzes abhängig ist.

15. Verfahren gemäss einem der Ansprüche 13 oder 14, **dadurch gekennzeichnet, dass** der Mobilteilnehmer (20) Prioritätskriterien für zu beanspruchende Netze (1, 2, 3) bestimmen kann.

16. Verfahren gemäss einem der Ansprüche 13 bis 15, **dadurch gekennzeichnet, dass** der benannte Heimnetzbetreiber Prioritätskriterien für zu beanspruchende Netze (1, 2, 3) bestimmen kann.

17. Verfahren gemäss dem vorhergehenden Anspruch, **dadurch gekennzeichnet, dass** auch die Tarife für Call-back-Verbindungen im benannten Identifizierungsmodul (40) abgelegt werden können.

18. Verfahren gemäss einem der vorhergehenden Ansprüche, **dadurch gekennzeichnet, dass** mindestens ein benanntes Netz (1, 2, 3) ein digitales Mobilfunknetz ist.

19. Verfahren gemäss einem der vorhergehenden Ansprüche, **dadurch gekennzeichnet, dass** mindestens ein benanntes Netz (1, 2, 3) ein Fixnetz ist, in welchem die Teilnehmer mit einem Identifizierungsmodul (40) identifiziert werden.

20. Verfahren gemäss einem der vorhergehenden Ansprüche, **dadurch gekennzeichnet, dass** mindestens ein benanntes Netz (1, 2, 3) ein PLC-Netz (Power Line Communication) ist, in welchem die Teilnehmer mit einem Identifizierungsmodul (40) identifiziert werden.

21. Verfahren gemäss einem der vorhergehenden Ansprüche, **dadurch gekennzeichnet, dass** auch Tarife, die für andere Prozesse mit dem benannten Identifizierungsmodul als für den Aufbau von Verbindungen durch das benannte besuchte Netz (2), im Identifizierungsmodul (40) abgelegt sind.

22. Verfahren gemäss einem der Ansprüche 7 bis 21, **dadurch gekennzeichnet, dass** die benannten Tarife verschiedener Netzbetreiber in einem gemeinsamen Server (11) abgelegt werden.

23. Verfahren gemäss dem vorhergehenden Anspruch, **dadurch gekennzeichnet, dass** der benannte Server (11) vom benannten Betreiber des Teilnehmerheimnetzes (1) verwaltet wird.

24. Verfahren gemäss einem der Ansprüche 22 oder 23, **dadurch gekennzeichnet, dass** der Verwalter des benannten Servers (11) verschiedene Tarife für die Beanspruchung verschiedener besuchten Netze bestimmen kann.

25. Identifizierungsmodul (40), das in wegnehmbarer Weise in einem Endgerät (41) eingesteckt werden kann, um einen Teilnehmer (20) in einem Telekommunikationsnetz (1, 2, 3) aus einem oder mehreren der folgenden Typen: digitales Mobilfunknetz, Fixnetz, in welchem Teilnehmer mit einem Identifizierungsmodul identifiziert werden, und/oder paketorientiertes Netz zu identifizieren, enthaltend:
Datenverarbeitungsmittel (401), welche das Speichern von Daten ermöglichen, die mindestens Identifikationsdaten des Teilnehmers (20) enthalten,
einen Speicherbereich (402), in welchem die Tarife mehrerer Netze (2) aus einem oder mehreren der folgenden Typen: digitales Mobilfunknetz, Fixnetz, in welchem Teilnehmer mit einem Identifizierungsmodul identifiziert werden, und/oder paketorientiertes Netz, die sich über das Gebiet erstrecken, wo sich der benannte Teilnehmer (20) befindet, abgelegt sind,
ein Modul (403), mit welchem das zu beanspruchende Netz ausgewählt werden kann,
**gekennzeichnet durch**
ein Modul (403), derart ausgestaltet, daß die zu verrechnenden Beträge für Verbindungen **durch** das ausgewählte Netz anhand der Dauer der Verbindungen und der benannten abgelegten Tarife ermittelt werden können,
wobei das Identifizierungsmodul (40) derart ausgestaltet ist, daß die Tarife, die von einer Vielzahl verschiedener Betreiber von besuchten Netzen (2, 3) verlangt werden, als auch die Zuschläge und/oder Rabatte, die vom Betreiber des Teilnehmerheimnetzes (1) für eine Verbindung des Teilnehmers in diesen besuchten Netzen (2, 3) verlangt werden, im Identifizierungsmodul (40) abgelegt sind.

26. Identifizierungsmodul gemäss dem vorhergehenden Anspruch, **dadurch gekennzeichnet, dass** es einen gesicherten Speicherbereich (402) für ein vorausbezahltes Geldkonto umfasst, von welchem der zu verrechnende Betrag abgebucht werden kann.

27. identif izierungsmodul gemäss dem Anspruch 25, **dadurch gekennzeichnet, dass** es ein Modul umfasst, um den zu verrechnenden Betrag in einen Billingbeleg zu verpacken und einem Verrechnungszentrum (12) zuzustellen.

28. Identifizierungsmodul gemäss dem vorhergehenden Anspruch, **dadurch gekennzeichnet, dass** es eine elektronische Signatur enthält, mit welchem die benannten Billingbelege elektronisch signiert werden können.

29. Identifizierungsmodul gemäss einem der Ansprüche 25 bis 28, **dadurch gekennzeichnet, dass** es ein Zeitbestimmungsmodul (400) umfasst, mit welchem die Dauer der Verbindungen ermittelt werden kann.

30. Identifizierungsmodul gemäss einem der Ansprüche 25 bis 29, **dadurch gekennzeichnet, dass** es ein Empfangsmodul umfasst, um Tarife aus einem Server (11) fernzuladen.

31. Identifizierungsmodul gemäss einem der Ansprüche 25 bis 30, **dadurch gekennzeichnet, dass** die Version der abgelegten Tarife im Identifizierungsmodul abgelegt ist.

32. Identifizierungsmodul gemäss einem der Ansprüche 30 bis 31, **dadurch gekennzeichnet, dass** der öffentliche elektronische Schlüssel des benannten Servers (11) im Identifizierungsmodul gespeichert ist, um die Signatur von Meldungen aus diesem Server zu prüfen.

## Claims

1. Method for billing a connection of a mobile subscriber (20) in a network (2) of one of the following types: mobile radio network, fixed line network in which users are identified with an identification module, and/or packet switching data network, to said mobile subscriber, the tariffs charged for the billing of this connection being stored in an identification module (40) of said mobile subscriber,
the tariffs (11-1, 11-2, 11-3) of several networks (1, 2, 3) of one or several of the following types: digital mobile radio network, fixed line network in which users are identified with an identification module, and/or packet switching data network, that extend over the territory where the mobile subscriber (20) can find himself, being stored in said identification module,
the network used for the connection being selectable on the basis of these said tariffs,
**characterized in that**
the amount to be billed is determined after the communication on the basis of the duration of the connection and of said stored tariff in the identification module (40),
said tariffs consisting of basic tariffs charged by a plurality of different operators of visited networks (2) extending over the territory where the mobile subscriber (2) finds himself and of surcharges or discounts applied by the operator of the subscriber's home network (1) for a connection of the subscriber in these visited networks (2).

2. Method according to the preceding claim, **characterized in that** said amount to be billed is displayed after the communication on the display of the mobile apparatus.

3. Method according to one of the preceding claims, **characterized in that** the amount to be billed is debited from a prepaid money account in the identification module (40).

4. Method according to one of the claims 1 to 2, **characterized in that** the amount to be billed is packed in a billing record and forwarded to a billing centre (12).

5. Method according to the preceding claim, **characterized in that** said billing records are signed electronically by the identification module (40).

6. Method according to one of the preceding claims, **characterized in that** said duration of the connection is determined on the basis of a time determining module (400) integrated in the identification module.

7. Method according to one of the preceding claims, **characterized in that** said tariffs are stored in a server (11) and can be remotely loaded in said identification module (40).

8. Method according to the preceding claim, **characterized in that** the version of the tariffs stored in the identification module (40) is checked when logging into a network (2) of one or several of the following types: digital mobile radio network, fixed line network in which users are identified with an identification module, and/or packet switching data network, and **in that** these tariffs can if necessary be updated.

9. Method according to one of the claims 7 or 8, **characterized in that** said remotely loaded tariffs are signed by said server (11) and **in that** this signature is verified in the identification module (40).

10. Method according to one of the claims 7 to 9, **characterized in that** said tariffs of several networks stored in said server (11) are administered and updated by the operators (1..n) of these networks themselves.

11. Method according to one of the preceding claims, **characterized in that** the tariffs of different networks (2) can be displayed on the display of the mobile apparatus (41) before a communication.

12. Method according to the preceding claim, **characterized in that** said mobile subscriber (20) himself can determine which network he wants to use.

13. Method according to one of the claims 1 to 11, **characterized in that** the choice of the network (2) to be used is made by said identification module (40) on the basis of said tariffs.

14. Method according to the preceding claim, **characterized in that** the choice of the network used is also dependent on the availability and/or on the quality of this network.

15. Method according to one of the claims 13 or 14, **characterized in that** the mobile subscriber (20) can determine priority criteria for networks (1, 2, 3) to be used.

16. Method according to one of the claims 13 to 15, **characterized in that** said home network operator can determine priority criteria for the networks (1, 2, 3) to be used.

17. Method according to the preceding claim, **characterized in that** also the tariffs for call-back communications can be stored in said identification module (40).

18. Method according to one of the preceding claims, **characterized in that** at least one said network (1, 2, 3) is a digital mobile radio network.

19. Method according to one of the preceding claims, **characterized in that** at least one said network (1, 2, 3) is a fixed line network in which users are identified with an identification module (40).

20. Method according to one of the preceding claims, **characterized in that** at least one said network (1, 2, 3) is a PLC (Power Line Communication) network, in which the subscribers are identified with an identification module (40).

21. Method according to one of the preceding claims, **characterized in that** also tariffs for other processes with said identification module than for the establishment of connections through said visited network (2) are stored in the identification module (40).

22. Method according to one of the claims 7 to 21, **characterized in that** said tariffs of different network operators are stored in a common server (11).

23. Method according to the preceding claim, **characterized in that** said server (11) is administered by said operator of the subscriber's home network.

24. Method according to one of the claims 22 or 23, **characterized in that** the administrator of said server (11) can determine different tariffs for using different visited networks.

25. Identification module (40) that can be removably inserted in a terminal (41) to identify a subscriber (20) in a telecommunica tion network (1, 2, 3) of one or several of the following types: digital mobile radio network, fixed line network in which users are identified with an identification module, and/or packet switching data network, comprising:
data processing means (401) that make possible the storing of data that comprise at least the identification data of the subscriber (20),
a memory area (402) in which are stored the tariffs of different networks (2) of one or several of the following types: digital mobile radio network, fixed line network in which users are identified with an identification module, and/or packet switching data network, that extend over the territory where the mobile subscriber (20) can find himself,
a module (403) with which the network to be used can be selected,
**characterized in that**
a module (403), designed in such a manner that the amounts to be billed for connections through the selected network can be determined on the basis of the duration of the connections and of said stored tariffs,
the identification module (40) being designed in such a way that both the tariffs charged by a plurality of different operators of visited networks (2, 3) as well as the surcharges or discounts applied by the operator of the subscriber's home network (1) for a connection of the subscriber in these visited networks (2, 3) are stored in the identification module (40).

26. Identification module according to the preceding claim, **characterized in that** it comprises a secured memory area (402) for a prepaid money account, from which the amount to be billed can be debited.

27. Identification module according to claim 25, **characterized in that** it comprises a module for packing the amount to be billed in a billing record and forwarding it to a billing centre (12).

28. Identification module according to the preceding claim, **characterized in that** it contains an electronic signature with which said billing records can be signed electronically.

29. Identification module according to one of the claims 25 to 28, **characterized in that** it comprises a time determining module (400) with which the duration of the connections can be determined.

30. Identification module according to one of the claims 25 to 29, **characterized in that** it comprises a receiver module for remotely loading tariffs from a server (11).

31. Identification module according to one of the claims 25 to 30, **characterized in that** the version of the stored tariffs is stored in the identification module.

32. Identification module according to one of the claims 30 to 31, **characterized in that** the public electronic key of said server (11) is stored in the identification module for verifying the signature of messages from this server.

## Revendications

1. Procédé pour facturer à un abonné mobile une communication de cet abonné mobile (20) dans un réseau (2) d'un ou plusieurs des types suivants: réseau radiomobile, réseau fixe dans lequel des abonnés sont identifiés avec un module d'identification, et/ou réseau à commutation de paquets, les tarifs exigés pour la facturation de cette communication étant stockés dans un module d'identification (40) de l'abonné mobile,
les tarifs (11-1, 11-2, 11-3) de plusieurs réseaux (1, 2, 3) d'un ou plusieurs des types suivants: réseau radiomobile numérique, réseau fixe dans lequel des abonnés sont identifiés avec un module d'identification, et/ou réseau à commutation de paquets, qui s'étendent sur le territoire où peut se trouver l'abonné mobile (20) étant stockés dans ledit module d'identification,
le réseau sollicité pour la communication pouvant être choisi au moyen de ces dits tarifs,
**caractérisé en ce que**
le montant à facturer est déterminé après la communication au moyen de la durée de la communication et dudit tarif stocké dans le module d'identification (40),
lesdits tarifs se composant de tarifs de base qui sont exigés par une pluralité de différents exploitants de réseaux visités (2) qui s'étendent sur le territoire où se trouve l'abonné mobile (20), et de suppléments et/ou rabais qui sont exigés par l'exploitant du réseau domestique (1) de l'abonné pour une communication de l'abonné dans ces réseaux visités (2).

2. Procédé selon la revendication précédente, **caractérisé en ce que** ledit montant à facturer est affiché après la communication sur l'affichage de l'appareil mobile.

3. Procédé selon l'une des revendications précédentes, **caractérisé en ce que** le montant à facturer est débité d'un compte monétaire prépayé dans le module d'identification (40).

4. Procédé selon l'une des revendications 1 à 2, **caractérisé en ce que** le montant à facturer est empaqueté dans un justificatif de facturation et est délivré à un centre de facturation (12).

5. Procédé selon la revendication précédente, **caractérisé en ce que** lesdits justificatifs de facturation sont signés électroniquement par le module d'identification (40).

6. Procédé selon l'une des revendications précédentes, **caractérisé en ce que** ladite durée de la communication est déterminée au moyen d'un module de détermination du temps (400) intégré dans le module d'identification.

7. Procédé selon l'une des revendications précédentes, **caractérisé en ce que** lesdits tarifs sont stockés dans un serveur (11) et peuvent être téléchargés dans ledit module d'identification (40).

8. Procédé selon la revendication précédente, **caractérisé en ce que** la version des tarifs stockés dans le module d'identification (40) est vérifiée lors de l'inscription dans un réseau (2) d'un ou plusieurs des types suivants: réseau radiomobile numérique, réseau fixe dans lequel des abonnés sont identifiés avec un module d'identification et/ou réseau à commutation de paquets, et **en ce que** ces tarifs sont actualisés en cas de besoin.

9. Procédé selon l'une des revendications 7 ou 8, **caractérisé en ce que** lesdits tarifs téléchargés sont signés par ledit serveur (11), et **en ce que** cette signature est vérifiée dans le module d'identification (40).

10. Procédé selon l'une des revendications 7 à 9, **caractérisé en ce que** lesdits tarifs de plusieurs réseaux qui sont stockés dans ledit serveur (11) peuvent être gérés et actualisés par les exploitants (1..n) de ces réseaux eux-mêmes.

11. Procédé selon l'une des revendications précédentes, **caractérisé en ce que** les tarifs de différents réseaux (2) peuvent être affichés sur l'affichage de l'appareil mobile (41) avant une communication.

12. Procédé selon la revendication précédente, **caractérisé en ce que** ledit abonné mobile (20) peut déterminer lui-même quel réseau il veut solliciter.

13. Procédé selon l'une des revendications 1 à 11, **caractérisé en ce que** le choix du réseau (2) à solliciter est effectué par ledit module d'identification (40) au moyen desdits tarifs.

14. Procédé selon la revendication précédente, **caractérisé en ce que** le choix du réseau sollicité dépend aussi de la disponibilité et/ou de la qualité de ce réseau.

15. Procédé selon l'une des revendications 13 ou 14, **caractérisé en ce que** l'abonné mobile (20) peut déterminer des critères de priorité pour des réseaux (1, 2, 3) à solliciter.

16. Procédé selon l'une des revendications 13 à 15, **caractérisé en ce que** ledit exploitant du réseau domestique peut déterminer des critères de priorité pour des réseaux (1, 2, 3) à solliciter.

17. Procédé selon la revendication précédente, **caractérisé en ce qu'**aussi les tarifs pour des communications à rétroappel peuvent être stockés dans ledit module d'identification (40).

18. Procédé selon l'une des revendications précédentes, **caractérisé en ce que** au moins un dit réseau (1, 2, 3) est un réseau radiomobile numérique.

19. Procédé selon l'une des revendications précédentes, **caractérisé en ce qu'**au moins un dit réseau (1, 2, 3) est un réseau fixe dans lequel les abonnés sont identifiés avec un module d'identification (40).

20. Procédé selon l'une des revendications précédentes, **caractérisé en ce qu'**au moins un dit réseau (1, 2, 3) est un réseau PLC (Power Line Communication) dans lequel les abonnés sont identifiés avec un module d'identification (40).

21. Procédé selon l'une des revendications précédentes, **caractérisé en ce qu'**aussi des tarifs pour d'autres procédés avec ledit module d'identification que l'établissement de communications au travers dudit réseau visité (2) sont stockés dans le module d'identification (40).

22. Procédé selon l'une des revendications 7 à 21, **caractérisé en ce que** lesdits tarifs de différents exploitants de réseau sont stockés dans un serveur (11) commun.

23. Procédé selon la revendication précédente, **caractérisé en ce que** ledit serveur (11) est administré par ledit exploitant du réseau domestique (1) de l'abonné.

24. Procédé selon l'une des revendications 22 ou 23, **caractérisé en ce que** l'administrateur dudit serveur (11) peut déterminer différents tarifs pour la sollicitation de différents réseaux visités.

25. Module d'identification (40) qui peut être inséré de manière amovible dans un terminal (41) pour identifier un abonné (20) dans un réseau de télécommunication (1, 2, 3) d'un ou plusieurs des types suivants:
réseau radiomobile numérique, réseau fixe dans lequel des abonnés sont identifiés avec un module d'identification et/ou réseau à commutation de paquets, comprenant:
des moyens de traitement des données (401) qui permettent la mémorisation de données qui comprennent au moins des données d'identification de l'abonné (20),
une zone de mémoire (402) dans laquelle sont stockés les tarifs de plusieurs réseaux (2) d'un ou plusieurs des types suivants: réseau radiomobile numérique, réseau fixe dans lequel des abonnés sont identifiés avec un module d'identification et/ou réseau à commutation de paquets, qui s'étendent sur le territoire où se trouve ledit abonné (20),
un module (403) avec lequel le réseau à solliciter peut être choisi,
**caractérisé par**
un module (403) configuré de sorte que les montants à facturer pour des communications au travers du réseau sélectionné peuvent être déterminés au moyen de la durée des communications et desdits tarifs stockés,
le module d'identification (40) étant configuré de sorte qu'aussi bien les tarifs qui sont exigés par une pluralité d'exploitants différents de réseaux visités (2, 3) que les suppléments et/ou rabais qui sont exigés par l'exploitant du réseau domestique (1) pour une communication de l'abonné dans ces réseaux visités (2, 3) sont stockés dans le module d'identification (40).

26. Module d'identification selon la revendication précédente, **caractérisé en ce qu'**il comprend une zone de mémoire (402) sécurisée pour un compte monétaire prépayé duquel le montant à facturer peut être débité.

27. Module d'identification selon la revendication 25, **caractérisé en ce qu'**il comprend un module pour empaqueter le montant à facturer dans un justificatif de facturation et le délivrer à un centre de facturation (12).

28. Module d'identification selon la revendication précédente, **caractérisé en ce qu'**il contient une signature électronique avec laquelle lesdits justificatifs de facturation peuvent être signés électroniquement.

29. Module d'identification selon l'une des revendications 25 à 28, **caractérisé en ce qu'**il comprend un module de détermination du temps (400) avec lequel la durée des communications peut être déterminée.

30. Module d'identification selon l'une des revendications 25 à 29, **caractérisé en ce qu'**il comprend un module de réception pour télécharger des tarifs à partir d'un serveur (11).

31. Module d'identification selon l'une des revendications 25 à 30, **caractérisé en ce que** la version des tarifs stockés est stockée dans le module d'identification.

32. Module d'identification selon l'une des revendications 30 à 31, **caractérisé en ce que** la clé électronique publique dudit serveur (11) est mémorisée dans le module d'identification pour vérifier la signature de messages provenant de ce serveur.
